# EUROPÄISCHE PATENTSCHRIFT

(11) **EP 2 946 096 B1**
(45) Veröffentlichungstag und Bekanntmachung des Hinweises auf die Patenterteilung: **28.06.2017**
(21) Anmeldenummer: 14707344.9
(22) Anmeldetag: 12.02.2014
(51) Int. Cl.: F02C 9/22, F02C 9/28

(54) **VERFAHREN ZUM BETREIBEN EINER GASTURBINE UNTERHALB IHRER NENNLEISTUNG**
METHOD FOR OPERATING A GAS TURBINE BELOW THE NOMINAL POWER THEREOF
PROCÉDÉ DE FONCTIONNEMENT D'UNE TURBINE À GAZ EN DESSOUS DE SA PUISSANCE NOMINALE

(30) Priorität: 22.02.2013 DE 102013202982
(43) Veröffentlichungstag der Anmeldung: 25.11.2015
(73) Patentinhaber: Siemens Aktiengesellschaft, 80333 München (DE)
(72) Erfinder: ENGLER, Thorsten, 47447 Moers (DE); GORYNSKI, Markus, 44879 Bochum (DE); GUTERMUTH, Manuel, 45309 Essen (DE); KREUTZER, Philipp, 45721 Haltern am See (DE); LINK, Marco, 45476 Mühlheim (DE); SAVILIUS, Nicolas, 45359 Essen (DE); SÜSELBECK, Kai, 46145 Oberhausen (DE); TERTILT, Marc, 45529 Hattingen (DE)
(86) Internationale Anmeldenummer: PCT/EP2014/052710
(87) Internationale Veröffentlichungsnummer: WO 2014/128039

(56) Entgegenhaltungen:
- WO-A1-2011/152840
- DE-A1-102008 044 442
- US-A1- 2006 042 258

## Beschreibung

Die Erfindung betrifft ein Verfahren zum Betreiben einer Gasturbine unterhalb ihrer Nennleistung, mit den Schritten:
- Bestimmen eines unteren Leistungsgrenzwertes der Gasturbine als denjenigen Leistungswert, ab dem ein weiteres Absenken der abgegebenen Gasturbinen-Leistung zu einem Verlassen eines CO-emissionskonformen Teillastbereiches der Gasturbine führt,
- Bereitstellen eines vorgegebenen Grenzwertes für eine abgegebene Gasturbinen-Leistung, wobei der vorgegebene Grenzwert kleiner ist als die Nennleistung der Gasturbine,
- Betreiben der Gasturbine mit einer abgegebenen Gasturbinen-Leistung oberhalb des vorgegebenen Grenzwertes mit einer konstanten gemittelten Abgastemperatur, oder daraus berechneten Regelgröße (im folgenden als Abgastemperatur bezeichnet), wobei zur Senkung der abgegebenen Gasturbinen-Leistung die Einlassleitschaufeln eines Verdichters der Gasturbine weiter geschlossen werden.

Bei zur elektrischen Energieerzeugung eingesetzten Gasturbinen ist es bekannt, dass diese nicht nur bei Nennlast betrieben werden, sondern auch darunter. Dieser so genannte Teillastbetrieb kann jedoch dazu führen, dass ein wesentlicher Luftüberschuss bei der Verbrennung des Brennstoffs auftritt; das Verbrennungsluftverhältnis ist dann wesentlich größer 1. Je niedriger dabei die von der Gasturbine bereitzustellende Leistung ist, umso größer kann der Luftüberschuss sein. In diesem Falle fällt die Verbrennungstemperatur des Brennstoff-Luft-Gemischs in der Brennkammer ab, was sich auf die für die CO-Emission relevante Primärzonen-Temperatur analog auswirkt. Wenn diese Temperatur dann einen Minimalwert unterschreitet, werden verstärkt CO-Emissionen generiert. Bei weiter reduzierter Primärzonen-Temperatur können die CO-Emissionen so weit ansteigen, dass sie einen zumeist gesetzlich vorgegebenen Emissionsgrenzwert übersteigen, wodurch der CO-emissionskonforme Teillastbereich der Gasturbine verlassen wird. Durch diese Tatsache kann der Betreiber der Gasturbine gezwungen werden - sofern ein gesetzlicher CO-Emissionsgrenzwert vorliegt - seine Gasturbine abzuschalten, es sei denn, dass die Leistung seiner Gasturbine weiter reduziert und gleichzeitig der CO-Emissionsgrenzwert unterschritten werden kann.

Um die soeben beschriebene Teillastfähigkeit der Gasturbine weiter zu erhöhen, schlägt die aus dem Stand der Technik bekannte DE 10 2008 044 442 A1 vor, derartige Gasturbinen mit einem Bypass-System auszustatten, durch welche ein Teil der Verdichterendluft an der Brennkammer vorbeigeführt und in den Abgaskanal der Gasturbine eingespeist werden kann. Dadurch kann die der Verbrennung zugeführte Luftmenge reduziert werden, was die Verbrennungstemperatur und somit die relevante Primärzonen-Temperatur anhebt. Die Anhebung führt dann zu einer Verminderung der CO-Emissionen, so dass trotz eines weiter reduzierten Lastbetriebs die Gasturbine CO-emissionskonform betrieben werden kann. Nachteilig ist jedoch, dass die im Stand der Technik bekannte Betriebsweise den Wirkungsgrad der Gasturbine unnötig reduziert, da die bygepasste verdichtete Luft nicht zur Arbeitsumsetzung in der Gasturbine beiträgt.

Weiter kann die WO 2011/152840 ein Betriebsverfahren für eine Gasturbine offenbaren, bei welchem ein Bypass-Luftstrom in einer Gasturbine im Teillastbetrieb derart geregelt wird, dass ein vorgegebener Temperatursollwert für das Abgas, welches aus der Entspannungsturbine entweicht, dann erhöht wird, falls der Betrieb droht, in einen nicht mehr zulässigen Emissionsbereich zu geraten. Diese Betriebsweise kann zudem durch ein Schließen der Verdichterleitschaufeln noch unterstützt werden.

Nachteilig an diesem Betriebsverfahren ist jedoch, dass bei der beschriebenen Betriebsweise ein relativ steiler Temperaturgradient an den Heißgas führenden Teilen die Folge wäre. Dies wiederum hat zur Folge, dass die betreffenden Bauteile aufgrund von verstärkten thermischen Spannungen einem relativ schnelleren Alterungsprozess unterworfen sind. Ebenfalls weist die Gasturbine aufgrund dieser relativ steilen Temperaturgradienten ein nicht ausreichend stabiles Regelverhalten auf. Dies gilt es jedoch mit Hilfe der vorliegenden Erfindung zu vermeiden.

Aufgabe der Erfindung ist es daher, die Bereitstellung eines Verfahrens zum Betrieb einer Gasturbine, die trotz eines Teillastbetriebs einen vergleichsweise hohen Wirkungsgrad bei CO-emissionskonformer Betriebsweise aufweist, wobei die Gasturbine ein ausreichend stabiles Regelverhalten aufweisen soll. Eine weitere Aufgabe der Erfindung ist die Bereitstellung eines Verfahrens, bei dem der emissionskonforme Gasturbinenbetrieb zu niedrigeren Lasten erweitert ist.

Die auf das Verfahren gerichtete Aufgabe wird mit den Merkmalen des Anspruchs 1 gelöst. Vorteilhafte Ausgestaltungen sind in den Unteransprüchen angegeben, deren technische Lehren in beliebiger Weise miteinander kombiniert werden können.

Erfindungsgemäß ist vorgesehen, dass bei sinkender Lastanforderung die abgegebene Gasturbinen-Leistung abgesenkt wird, wobei, wenn die abgegebene Gasturbinen-Leistung den vorgegebenen Grenzwert unterschreitet, die Abgastemperatur der Gasturbine mit fortschreitender Absenkung der Gasturbinen-Leistung fortschreitend bis zu einem Maximum erhöht wird, wobei der vorgegebene Grenzwert so groß gewählt ist, dass die Temperatur-Anhebungen der Abgastemperatur sich über einen möglichst großen CO-emissionskonformen Teillastbereich der Gasturbine erstrecken.

Häufig wird zwischen einer gemessenen Abgastemperatur und einer so genannten korrigierten Abgastemperatur unterschieden. Unter der gemessenen Abgastemperatur wird eine am Turbinenausgang im Abgas tatsächlich auftretende Temperatur verstanden. Im Detail werden mehrere Abgastemperaturen durch in einer Durchströmungsebene liegende Sensoren gemessen, deren Werte dann zu einer einzigen Temperatur zusammengefasst werden. Im Gegensatz dazu wird unter der korrigierten Abgastemperatur eine Regelgröße verstanden, welche unter Berücksichtigung der Temperatur der angesaugten Luft und der Turbinendrehzahl aus der gemessenen Abgastemperatur abgeleitet wird. In Sinne der Patentanmeldung kann unter der gemittelten Abgastemperatur sowohl die gemessene Abgastemperatur, die korrigierte Abgastemperatur als auch eine anderweitig ermittelte Abgastemperatur verstanden werden.

Eine vorteilhafte Ausführung der Erfindung ist, dass die Anhebung der Abgastemperatur so erfolgt, dass der Grenzwert für die CO-Emissionen erst mit Erreichen der maximal zulässigen Abgas-Temperatur erreicht wird.

Vorzugsweise liegt der vorgegebene Grenzwert nahe an der Nennlast der Gasturbine. Der vorgegebene Grenzwert ist aber auf jeden Fall kleiner als 100% der Nennlast; relative Lastangaben werden auf die Nennlast der Gasturbine bezogen. Besonders bevorzugt ist die Ausgestaltung, bei der der vorgegebene Grenzwert größer als 70% der Nennlast, insbesondere größer als 80% der Nennlast und besonders bevorzugt größer als 90% der Nennlast ist.

Durch die voran beschriebene Maßnahme erfolgt eine vergleichsweise moderate Änderung der Abgastemperatur, um die von diesen Temperaturänderungen betroffenen Gasturbinenbauteilen sowie die stromab liegenden nachgeschalteten Komponenten möglichst gering zu belasten.

Mit der Erfindung ist es somit einerseits möglich, die untere Grenze des CO-emissionskonformen Arbeitsbereichs der Gasturbine innerhalb des Verstellbereichs der Einlassleitschaufeln weiter zu erniedrigen und somit einen geringeren Prozentsatz an Nennleistung zu erreichen, bei dem die Gasturbine weiterhin im CO-emissionskonformen Bereich betrieben werden kann. Andererseits ergibt sich ein stabiles Regelverhalten der Gasturbine, da steilere Temperaturgradienten vermieden werden. Weiter führt das neue Betriebsverfahren zu einem verbesserten Wirkungsgrad der Gasturbine im Teillastbetrieb. Zudem ist die Umsetzung des erfindungsgemäßen Verfahrens ohne konstruktive Änderung der Gasturbine möglich, d.h. zur Umsetzung der Erfindung ist lediglich die Leittechnik ohne nennenswerten Aufwand an das erfindungsgemäße Verfahren anzupassen. Wenn jedoch die das Abgas führenden Bauteile wie Abgasdiffusor, Abgastrecke und ein ggf. nachgeschalteter Kessel für höhere Abgastemperatures als bisher ertüchtigt werden, können die Vorteile in größerem Maße auftreten.

Mithin sind die Temperaturgradienten während der auftretenden Lastwechsel besonders flach ausgebildet, wodurch sich die temperaturbedingten Materialdehnungen und somit die Materialspannungen vergleichsweise gering gehalten. Dies wirkt sich Lebensdauer verlängernd auf die Heißgas-Bauteile der Gasturbine und auf die das Abgas führenden Bauteile aus.

Wenn der untere Leistungsgrenzwert bestimmt wurde für einen Betrieb, bei dem die Abgas-Temperatur unabhängig der abgegebenen Gasturbinen-Leistung auf einen konstanten Wert geregelt wurde, ist vorzugsweise vorgesehen, dass mit dem Absenken der abgegebenen Gasturbinen-Leistung der untere Leistungsgrenzwert verringert wird. Die Verringerung des unteren Leistungsgrenzwertes ist deshalb möglich, da durch das Anheben der Abgastemperatur derjenige Leistungswert der Gasturbine, bei dem die Emissionen im Abgas den gesetzlichen Grenzwert überschreiten, sich verkleinert. Mithin wird mit steigender Abgas-Temperatur das CO-emissionskonforme Betriebsfenster nach unten erweitert. Insofern ist es zweckdienlich, den unteren Leistungsgrenzwert mit steigender Abgas-Temperatur zu verringern.

Gemäß einer weiteren vorteilhaften Ausgestaltung erfolgt die letzte Anhebung der Abgastemperatur auf das Abgas-Temperatur-Maximum mit Erreichen des unteren ggf. verringerten Leistungsgrenzwertes oder erst kurz davor. Damit ist gewährleistet, dass der Temperaturanstieg der Abgastemperatur über die Leistungsreduzierung vergleichsweise flach ausfällt und sich nahezu über den gesamten CO-emissionskonformen Teillastbereich der Gasturbine erstreckt.

Dennoch ist die im vorherigen Absatz beschriebene Maßnahme nicht zwingend. Je nach Zielsetzung ist es auch von Vorteil, den Anstieg der Abgastemperatur steiler zu wählen und die maximal zulässige Abgastemperatur schon weit vor Erreichen des unteren ggf. verringerten Leistungsgrenzwertes zu erreichen. Damit ließe sich der Wirkungsgrad steigern, da die Verbrennungstemperatur bereits bei nur geringfügig abgesenkter Leistung vergleichsweise hoch gehalten werden würde. Zu beachten wäre dann lediglich, dass die Gasturbine nicht überfeuert wird.

Zweckmäßigerweise wird gleichzeitig mit der Erhöhung der Abgastemperatur die Menge einer der Brennkammer zugeführten Verbrennungsluft durch weiteres Zudrehen einer Einlassleitschaufel eines Verdichters der Gasturbine reduziert.

Die voran beschriebene Fahrweise ist insbesondere dann vorteilhaft, wenn die Abgas-Temperatur der Gasturbine geregelt wird und bei dem ein Sollwert für die Abgas-Temperatur mit dem Unterschreiten des vorgegebenen Grenzwertes und bei einer weiteren Absenkung der Gasturbinen-Leistung bis zum Erreichen des Abgas-Temperatur-Maximums fortgesetzt erhöht wird.

Weitere Vorteile und Merkmale der Erfindung werden anhand eines Ausführungsbeispiels in der Figurenbeschreibung näher erläutert.

Es zeigen:
- Figur 1: den schematischen Aufbau einer Gasturbine;
- Figur 2: ein Diagramm, bei dem die Stellung der Einlassleitschaufeln, die Abgas-Temperatur und die im Abgas auftretenden CO-Emissionen über der Generator-Klemmen-Leistung aufgezeigt ist.

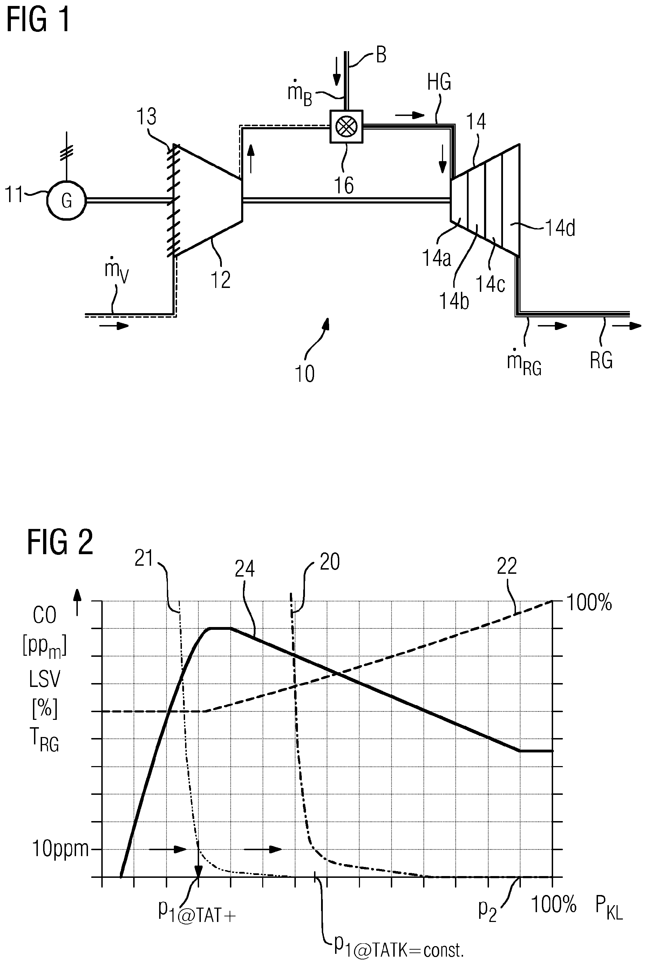

Figur 1 zeigt schematisch eine stationäre Gasturbine 10 mit einem Verdichter 12 und einer Turbineneinheit 14, deren Rotoren miteinander starr gekoppelt sind. Zwischen dem Verdichterausgang und dem Eintrittsabschnitt der Turbineneinheit 14 ist eine Brennkammer 16 vorgesehen. Diese kann als Silobrennkammer, Rohrbrennkammer oder als Ringbrennkammer ausgestaltet sein. Im Falle von Rohrbrennkammern sind zumeist zehn, zwölf oder noch mehr Rohrbrennkammern vorgesehen. An dem Verdichterrotor ist zudem ein Generator 11 zur Stromerzeugung angekoppelt. Am Lufteinlass des Verdichters 12 sind um ihre Längsachse schwenkbare Verdichtereinlass-Leitschaufeln 13 vorgesehen, mit denen der Verdichtermassenstrom mᵥ einstellbar ist. Diese Leitschaufeln 13 sind lediglich schematisch dargestellt. Die Turbineneinheit 14 umfasst gemäß dem Ausführungsbeispiel vier aufeinander folgende Turbinenstufen 14ₐ, 14_{b}, 14_{c} und 14_{d}, die in der einzigen Figur ebenfalls nur schematisch dargestellt sind.

Im Betrieb saugt der Verdichter 12 Umgebungsluft an, verdichtet diese und führt sie der Brennkammer 16 zu. Dort wird die verdichtete Luft mit einem Brennstoff B gemischt und in einer Flamme zu einem Heißgas HG verbrannt. Das Heißgas HG strömt in den Eintritt der Turbineneinheit 14 und entspannt sich an den nicht weiter dargestellten Turbinenschaufeln der Turbineneinheit 14 arbeitsleistend. Das so entstehende Abgas RG strömt am Austritt der Turbineneinheit 14 über einen nicht dargestellten Abgasdiffusor ab. Danach wird das Abgas RG entweder über einen Schornstein in die Umgebung abgelassen oder das Abgas RG wird in einem so genannten Kessel, welcher als Abhitzedampferzeuger bekannt ist, zur Erzeugung von Dampf genutzt. Der im Abhitzedampferzeuger erzeugte Dampf dient dann zum Antrieb von nicht weiter dargestellten Dampfturbinen oder auch als Prozessdampf. Mit Hilfe des Brennstoffmassenstroms m_{B} und dem Verdichtermassenstrom mᵥ lässt sich die von der Gasturbine 10 zu erbringende Leistung einstellen.

Sofern die Gasturbine 10 unterhalb ihrer Nennleistung betrieben wird, ist vorgesehen, dass selbst schon bei hoher Teillast die Abgas-Temperatur der Gasturbine geringfügig angehoben wird, obwohl eine derartige Abgas-Temperaturanhebung zur Vermeidung von CO-Emissionen noch nicht erforderlich ist.

Dieses Verfahren wird im Detail anhand des in Figur 2 dargestellten Diagramms erläutert. Die Abszisse des Diagramms zeigt die relative Generator-Klemmleistung P_{KL}, welche die abgebende Gasturbinen-Leistung repräsentiert. Der Maximalwert der relativen Gasturbinen-Leistung beträgt 100% (der Nennleistung). Auf der Ordinate sind drei Parameter aufgetragen. Als erster Parameter ist der relative Öffnungswinkel der verstellbaren Leitschaufel angegeben, wobei ein Wert von 100% die vollständige Öffnung des Verdichtereinlasses repräsentiert. Mit abnehmender Prozentzahl für die Position der Einlassleitschaufeln wird der Einlass des Verdichters weiter geschlossen, wodurch der Verdichtermassenstrom mᵥ abnimmt. Als zweites sind auf der Ordinate die im Abgas der Gasturbine enthaltenen CO-Emissionen aufgetragen mit der Einheit [ppm], d.h. Parts per Million. Als dritter Parameter ist im Diagramm auf der Ordinate die Abgas-Temperatur aufgetragen.

Für jeden der drei Parameter ist in dem Diagramm eine Kennlinie eingezeichnet. Die Kennlinie 22 zeigt den Öffnungsgrad der verstellbaren Einlassleitschaufel in Abhängigkeit der abgegebenen Gasturbinen-Leistung. Die Kennlinie 20 zeigt die CO-Emission in Abhängigkeit von der abgegebenen Gasturbinen-Leistung bei konstanter Abgastemperatur. Die Kennlinie 21 zeigt die CO-Emission in Abhängigkeit von der abgegebenen Gasturbinen-Leistung bei erfindungsgemäß angehobener Abgas-temperatur. Die Kennlinie 24 zeigt die Temperatur des Abgases der Gasturbine in Abhängigkeit der abgegebenen Gasturbinen-Leistung gemäß dem erfindungsgemäßen Verfahren.

Die Kennlinie 20 zeigt die Abhängigkeit der CO-Emissionen im Abgas der Gasturbine 10, so wie sie im Betrieb einer herkömmlichen Gasturbine 10 - also ohne das erfindungsgemäße Verfahren - auftreten. Bei der nachfolgenden Erläuterung des erfindungsgemäßen Verfahrens wird ein gesetzlicher Grenzwert von beispielsweise 10 ppm Kohlenstoffmonoxid angenommen. Mit Hilfe des gesetzlichen Grenzwerts kann in Verbindung mit Kennlinie 20 ein unterer Leistungsgrenzwert p_{1@TATK=const}. als untere Grenze des CO-Emissionskonformen Teillastbereichs der Gasturbine 10 ermittelt werden: der CO-emissionskonforme Leistungsbereich der Gasturbine 10 liegt im Intervall zwischen p_{1@TATK=const}. und kleiner 100% der Nennleistung der Gasturbine 10, wenn die Gasturbine 10 so wie bisher mit konstanter Abgastemperatur in Teillast betrieben wird..

Zudem ist ein vorgegebener Grenzwert p₂ zu bestimmen. Dieser könnte auch als oberer Leistungsgrenzwert bezeichnet werden und liegt vergleichsweise nahe an der Nennlast der Gasturbine 10, bspw. bei einem Wert von 95% der Nennleistung. Es ist jedoch auch möglich, diesen Wert etwas geringer zu wählen. Wichtig ist nur, dass p₂ näher an der Nennleistung liegt als an einem unteren, verringerten Leistungsgrenzwert p_{1@TAT+}. Der untere verringerte Leistungsgrenzwert p_{1@TAT+} ergibt sich aus demjenigen Arbeitspunkt der Gasturbine 10, bei dem trotz angehobener Primärzonentemperatur und angehobener Abgas-Temperatur CO-Emissionen im Abgas auftreten, die oberhalb des gesetzlichen Grenzwertes für CO-Emissionen liegt.

Die unteren Leistungsgrenzwerte p_{1@TATK=const.}, p_{1@TAT+} der Gasturbine 10 können jedoch auch bei Emissionen ermittelt werden, die geringfügig vom gesetzlich vorgegebenen CO-Emissionslimit abweichen, um sicherzustellen, dass dieses CO-Emissionslimit stets zuverlässig nicht verletzt wird.

Mit dem vorgegebenen Grenzwert p₂ ist derjenige Arbeitspunkt der Gasturbine 10 bestimmt, bei dem mit weiterem Unterschreiten des vorgegebenen Grenzwertes p₂ die Abgas-Temperatur durch das Zudrehen der Einlassleitschaufeln 13 angehoben wird. Durch das Zudrehen der Einlassleitschaufeln 13 bei nur geringfügig reduziertem Brennstoffmassenstrom m_{B} kann die Verbrennungstemperatur und somit die Primärzonen-Temperatur geringfügig angehoben werden, was die CO-Emissionen weiterhin auf einem niedrigen Niveau verharren lässt. Mit weiterem Absenken der Gasturbinen-Leistung schließen die Verdichtereinlass-Leitschaufeln weiter, wodurch der Verdichtermassenstrom mᵥ weiter abgesenkt wird. Gleichzeitig wird die Gasturbine 10 so betrieben, dass die Verbrennungstemperaturen und auch somit die Abgastemperaturen weiter ansteigen. Dadurch verschiebt sich die Kennlinie für die CO-Emissionen von höheren Teillastwerten zu niedrigeren Teillastwerten. Aufgrund der Tatsache, dass der vorgegebene Grenzwert p₂ wesentlich größer als der untere verringerte Leistungsgrenzwert p_{1@TAT+} ist und der vorgegebene Grenzwert p₂ in etwa der Nennlast der Gasturbine entspricht, ist der Anstieg der Abgastemperatur und auch der Anstieg der Primärzonen-Temperatur eher flach, verglichen mit einer Fahrweise der Gasturbine, bei der der vorgegebene Grenzwert p2 vergleichsweise nah an dem unteren, verringerten Leistungsgrenzwert p_{1@TAT+} der Gasturbine liegt. Hierdurch kann ein vergleichsweise bauteilschonender Betrieb der Gasturbine 10 gewährleistet werden.

Insgesamt betrifft die Erfindung somit ein Verfahren zum Betreiben einer Gasturbine 10 unterhalb ihrer Nennleistung mit den Schritten:
- Bestimmen eines unteren Leistungsgrenzwertes p_{1@TATK=const.} der Gasturbine 10 als denjenigen Leistungsgrenzwert, ab dem ein weiteres Absenken der abgegebenen Gasturbinen-Leistung zu einem Verlassen eines CO-emissionskonformen Teillastbereiches der Gasturbine 10 führt,
- Bereitstellen eines vorgegebenen Grenzwertes p₂ für eine abgegebene Gasturbinen-Leistung, wobei der vorgegebene Grenzwert p₂ kleiner ist als die Nennleistung der Gasturbine 10,
- Betreiben der Gasturbine 10 mit einer abgegebenen Gasturbinen-Leistung oberhalb des vorgegebenen Grenzwertes p₂ mit einer konstanten Abgastemperatur, wobei zur Senkung der abgegebenen Gasturbinen-Leistung die Einlassleitschaufeln 13 eines Verdichters 12 der Gasturbine 10 weiter geschlossen werden.

Um bei der Vorbereitung eines besonders niedrigen Teillastbetriebes der Gasturbine 10 größere Temperaturgradienten zu vermeiden und folglich Gasturbinenbauteile zu schonen, ist vorgesehen, dass der vorgegebene Grenzwert p₂ so groß gewählt ist, dass die Anhebungen der Primärzonentemperatur, der Verbrennungstemperatur bzw. der Abgastemperatur sich über eine möglichst großen CO-emissionskonformen Teillastbereich der Gasturbine 10 erstrecken.

## Patentansprüche

1. Verfahren zum Betreiben einer Gasturbine (10) unterhalb ihrer Nennleistung,
mit den Schritten:
- Bestimmen eines unteren Leistungsgrenzwertes (p₁) der Gasturbine (10) als denjenigen Leistungsgrenzwert, ab dem ein weiteres Absenken der abgegebenen Gasturbinen-Leistung zu einem Verlassen eines CO-emissionskonformen Teillastbereiches der Gasturbine (10) führt,
- Bereitstellen eines vorgegebenen Grenzwertes (p₂) für eine abgegebene Gasturbinen-Leistung, wobei der vorgegebene Grenzwert (p₂) kleiner ist als die Nennleistung der Gasturbine,
- Betreiben der Gasturbine mit einer abgegebenen Gasturbinen-Leistung oberhalb des vorgegebenen Grenzwertes (p₂) mit einer konstanten gemittelten Abgastemperatur, oder daraus berechneten Regelgröße,
- wobei zur Senkung der abgegebenen Gasturbinen-Leistung die Einlassleitschaufeln (13) eines Verdichters (12) der Gasturbine (10) weiter geschlossen werden,
- Absenken der abgegebenen Gasturbinen-Leistung, wobei, wenn die abgegebene Gasturbinen-Leistung den vorgegebenen Grenzwert (p₂) unterschreitet, die Abgastemperatur der Gasturbine (10) mit fortschreitender Absenkung der GT-Leistung fortschreitend bis zu einem Abgas-Temperatur-Maximum erhöht wird,
- **gekennzeichnet durch** den Schritt, dass:
der vorgegebene Grenzwert (p₂) so groß gewählt ist, dass die Temperatur-Anhebungen sich über einen möglichst großen CO-emissionskonformen Teillastbereich der Gasturbine erstrecken.

2. Verfahren nach Anspruch 1,
bei dem der vorgegebene Grenzwert (p₂) größer als 70% der Nennlast, vorzugsweise größer als 80% der Nennlast, besonders bevorzugt größer als 90% der Nennlast ist.

3. Verfahren nach Anspruch 1 oder 2,
bei dem mit Absenken der abgegebenen Gasturbinen-Leistung der untere Leistungsgrenzwert (p_{1@TAT+}) verringert wird.

4. Verfahren nach Anspruch 3,
bei dem die letzte Anhebung der Abgastemperatur auf das Abgas-Temperatur-Maximum erfolgt, bevor der untere Leistungsgrenzwert (p_{1@TAT+}) erreicht ist.

5. Verfahren nach einem der Ansprüche 1 bis 4,
bei dem mit weiterem Absenken der abgegeben Gasturbinen-Leistung die Abgastemperatur schrittweise oder kontinuierlich erhöht wird.

6. Verfahren nach Anspruch 5,
bei dem zur Erhöhung der Abgastemperatur die Menge einer der Brennkammer (16) zugeführter Verbrennungsluft durch weiteres Zudrehen von Einlassleitschaufeln (13) eines Verdichters (12) der Gasturbine (10) reduziert wird.

7. Verfahren nach einem der vorangehenden Ansprüche,
bei dem die Abgastemperatur der Gasturbine (10) geregelt wird und bei dem ein Sollwert für die Abgastemperatur mit dem Unterschreiten des vorgegebenen Grenzwertes und bei weiterem Absenken der Gasturbinen-Leistung bis zum Erreichen des Abgastemperatur-Maximums fortgesetzt erhöht wird.

## Claims

1. Method for operating a gas turbine below its rated power, having the steps of:
- determining a lower power limit value (p₁) for the gas turbine (10) as that power limit value beyond which further lowering of the output gas turbine power leads to departure from a partial load range of the gas turbine (10) in accordance with CO emissions limits,
- preparing a predefined limit value (p₂) for an output gas turbine power, wherein the predefined limit value (p₂) is smaller than the rated power of the gas turbine,
- operating the gas turbine with an output gas turbine power above the predefined limit value (p₂) with a constant averaged exhaust gas temperature, or a control variable calculated therefrom,
- wherein in order to lower the output gas turbine power the inlet guide vanes (13) of a compressor (12) of the gas turbine (10) are closed further,
- lowering the output gas turbine power, wherein, if the output gas turbine power drops below the predefined limit value (p₂), the exhaust gas temperature of the gas turbine (10) continues to be raised, as the gas turbine power continues to be lowered, up to a maximum exhaust gas temperature,
- **characterized by** the step that:
the predefined limit value (p₂) is chosen such that the temperature rises extend over as large as possible a partial load range of the gas turbine in accordance with CO emissions limits.

2. Method according to Claim 1,
in which the predefined limit value (p₂) is greater than 70% of the rated load, preferably greater than 80% of the rated load, particularly preferably greater than 90% of the rated load.

3. Method according to Claim 1 or 2,
in which, as the output gas turbine power is lowered, the lower power limit value (p_{1@TAT+}) is reduced.

4. Method according to Claim 3,
in which the last exhaust gas temperature rise to the maximum exhaust gas temperature takes place before the lower power limit value (p_{1@TAT+}) is reached.

5. Method according to one of Claims 1 to 4,
in which, as the output gas turbine power is lowered further, the exhaust gas temperature is raised stepwise or continuously.

6. Method according to Claim 5,
in which, in order to raise the exhaust gas temperature, the quantity of combustion air supplied to the combustion chamber (16) is reduced by further closing inlet guide vanes (13) of a compressor (12) of the gas turbine (10).

7. Method according to one of the preceding claims,
in which the exhaust gas temperature of the gas turbine (10) is regulated, and in which a setpoint value for the exhaust gas temperature continues to be raised, when the predefined limit value is undershot and as the gas turbine power is further lowered, until the maximum exhaust gas temperature is reached.

## Revendications

1. Procédé pour faire fonctionner une turbine (10) à gaz en dessous de sa puissance nominale,
comprenant les stades :
- on définit une valeur (p₁) limite inférieure de puissance de la turbine (10) à gaz, comme la valeur limite de puissance à partir de laquelle un abaissement supplémentaire de la puissance cédée par la turbine à gaz fait quitter une plage de charge partielle conforme en émission de CO de la turbine (10) à gaz,
- on met à disposition une valeur (p2) limite donnée à l'avance d'une puissance cédée par la turbine à gaz, la valeur (p2) limite donnée à l'avance étant plus petite que la puissance nominale de la turbine à gaz,
- on fait fonctionner la turbine à gaz à une puissance cédée par la turbine à gaz, au dessus de la valeur (p2) limite donnée à l'avance, à une température des gaz d'échappement en moyenne constante ou à une grandeur de régulation, qui en est calculée,
- dans lequel, pour abaisser la puissance cédée par la turbine à gaz, on ferme davantage les aubes (13) directrices d'entrée d'un compresseur (12) de la turbine (10) à gaz,
- on abaisse la puissance cédée par la turbine à gaz, dans lequel, si la puissance cédée par la turbine à gaz devient inférieure à la valeur (p2) limite donnée à l'avance, on élève la température de gaz d'échappement de la turbine (10) à gaz en continuant à abaisser la puissance de la turbine à gaz, en continuant jusqu'à un maximum de température des gaz d'échappement,
- **caractérisé en ce que** :
on choisit la valeur (p2) limite donnée à l'avance si grande que les élévations de température s'étendent sur une plage de charge partielle conforme en émission de CO de la turbine à gaz la plus grande possible.

2. Procédé suivant la revendication 1,
dans lequel la valeur (p2) limite donnée à l'avance représente plus de 70% de la charge nominale, de préférence plus de 80% de la charge nominale, d'une manière particulièrement préférée plus de 90% de la charge nominale.

3. Procédé suivant la revendication 1 ou 2,
dans lequel on diminue la valeur (p_{1@TAT+}) limite inférieure de puissance avec l'abaissement de la puissance cédée par la turbine à gaz.

4. Procédé suivant la revendication 3,
dans lequel la dernière élévation de la température des gaz d'échappement s'effectue jusqu'au maximum de la température des gaz d'échappement, avant que la valeur (p_{1@TAT+}) limite inférieure de puissance soit atteinte.

5. Procédé suivant l'une des revendications 1 à 4,
dans lequel on augmente, pas à pas ou en continu, la température des gaz d'échappement avec l'abaissement supplémentaire de la puissance cédée par la turbine à gaz.

6. Procédé suivant la revendication 5,
dans lequel, pour élever la température des gaz d'échappement, on réduit la quantité d'air de combustion apportée à la chambre de combustion (16) en fermant davantage des aubes (13) directrices d'entrée d'un compresseur (12) de la turbine (10) à gaz.

7. Procédé suivant l'une des revendications précédentes,
dans lequel on régule la température des gaz d'échappement de la turbine (10) à gaz et dans lequel on continue à élever une valeur de consigne de la température des gaz d'échappement avec le fait que l'on passe en dessous de la valeur limite donnée à l'avance et lorsque l'on continue à abaisser la puissance de la turbine à gaz jusqu'à l'obtention du maximum de la température des gaz d'échappement.
